# EUROPÄISCHE PATENTANMELDUNG

(11) **EP 3 067 511 A1**
(43) Veröffentlichungstag der Anmeldung: **14.09.2016**
(21) Anmeldenummer: 15197491.2
(22) Anmeldetag: 02.12.2015
(51) Int. Cl.: E21B 7/02, F16P 3/14

(54) **VERTIKAL-BOHRGERÄT MIT GESICHERTEM ARBEITSBEREICH**

(30) Priorität: 09.03.2015 DE 202015101170 U
(71) Anmelder: Geotec Bohrtechnik GmbH, 59394 Nordkirchen (DE)
(72) Erfinder: Zumholz, Martin, 59348 Lüdinghausen (DE)
(74) Vertreter: Habbel, Ludwig

(57) **Zusammenfassung**

Bei einem Vertikal-Bohrgerät, mit einem aufrechten Mast und einem Schlitten, der an dem Mast innerhalb eines so genannten Höhenverstellbereichs höhenbeweglich verfahrbar ist, und mit einem Sicherheitsbereich, der sich um den Schlitten herum und über dessen Höhenverstellbereich erstreckt, schlägt die Erfindung vor, dass oberhalb des Schlittens ein Überwachungssensor angeordnet ist, dessen Erfassungsbereich nach unten ausgerichtet ist, derart, dass der Sicherheitsbereich mittels des Überwachungssensors erfasst wird, und dass der Überwachungssensor wirksam mit einer Sicherheitsschaltung verbunden ist.

## Beschreibung

Die Erfindung betrifft ein Vertikal-Bohrgerät nach dem Oberbegriff des Anspruchs 1.

Gattungsgemäße Vertikal-Bohrgeräte sind aus der Praxis bekannt. Sie dienen dazu, ein Bohrgestänge in den Boden einzubringen. Der am Mast vertikal verfahrbare Schlitten trägt eine Halterung, in welche wiederum das Bohrgestänge eingespannt ist, und kann entsprechend dem Bohrvortrieb nach unten verfahren werden bzw. anschließend nach oben verfahren werden, wenn ein neuer Abschnitt an das bereits in das Bohrloch abgesenkte Bohrgestänge angesetzt werden soll. Nach dem Einbringen der Bohrung wird der Schlitten wiederum auf und ab verfahren, um nach und nach die einzelnen Abschnitte des Bohrgestänges aufzuholen und zu demontieren, so dass auf diese Weise das Bohrgestänge in seine einzelnen Abschnitte zerlegt werden kann.

Als Sicherung zur Vermeidung von Unfällen ist bei dem gattungsgemäßen Vertikal-Bohrgerät ein Käfig vorgesehen, der den Sicherheitsbereich umgibt, so dass ein versehentlicher Kontakt mit dem Schlitten oder dem Bohrgestänge ausgeschlossen ist. Der Käfig erschwert allerdings auch - nämlich gewollt - den Zugang zum Schlitten, der zur Montage oder zur Demontage der einzelnen Abschnitte des Bohrgestänges jedoch zwingend notwendig ist, so dass für derartige Arbeiten der Käfig jedes Mal demontiert bzw. aus dem Weg gebracht werden muss, was die übrigen Arbeitsabläufe behindert.

Der Erfindung liegt die Aufgabe zugrunde, ein gattungsgemäßes Vertikal-Bohrgerät dahingehend zu verbessern, dass es sowohl einen zuverlässigen Unfallschutz in Bezug auf den Schlitten als auch einen unkomplizierten Zugang zum Schlitten ermöglicht.

Diese Aufgabe wird durch ein Vertikal-Bohrgerät mit den Merkmalen des Anspruchs 1 gelöst. Vorteilhafte Ausgestaltungen sind in den Unteransprüchen beschrieben.

Die Erfindung schlägt mit anderen Worten vor, den Sicherheitsbereich um den Schlitten herum nicht mechanisch mit Hilfe von Barrieren abzusichern bzw. zu begrenzen, sondern vielmehr mittels eines Überwachungssensors diesen Sicherheitsbereich zu erfassen und zu überwachen. Gerät ein Gegenstand in den Sicherheitsbereich und wird vom Überwachungssensor erfasst, so gibt der Überwachungssensor ein entsprechendes Sensorsignal aus. Der Überwachungssensor ist vorschlagsgemäß mit einer Sicherheitsschaltung verbunden. Diese Verbindung kann über ein Kabel erfolgen, oder auch drahtlos, beispielsweise per Funk, so dass in jedem Fall eine wirksame Verbindung geschaffen ist, die nämlich die Übertragung von Sensorsignalen zur Sicherheitsschaltung ermöglicht.

Die Sicherheitsschaltung kann in an sich bekannter Weise ein Sicherheitssignal auslösen. Das Sicherheitssignal kann in einer ersten Ausgestaltung beispielsweise in Form eines akustischen und / oder optischen so genannten Alarmsignals ausgestaltet sein, welches für das Personal wahrnehmbar ist. Alternativ kann das Sicherheitssignal in einer zweiten Ausgestaltung in Form eines so genannten Steuersignals ausgestaltet sein, welches nämlich von der Steuerung des Vertikal-Bohrgeräts verarbeitet wird und beispielsweise sowohl den Drehantrieb des Bohrgestänges als auch die Vertikalbewegung des Schlitten stoppt bzw. die entsprechende Bewegung verlangsamt. Insbesondere kann vorgesehen sein, dass Bewegungen, die in einer äußeren Zone des Sicherheitsbereichs, nämlich in einem vergleichsweise größeren Abstand vom Schlitten und vom Mast, vom Überwachungssensor erfasst werden, eine Art Vorwarnung auslösen, indem nämlich beispielsweise das akustische und / oder optische Signal ausgegeben wird. Dies ermöglicht es einem Benutzer, der versehentlich in die äußere Zone des Sicherheitsbereichs geraten ist, sich wieder aus dieser äußeren Zone zu entfernen, ohne dass dadurch der Betrieb des Vertikal-Bohrgeräts unterbrochen wird. Bewegungen, die jedoch in einer inneren Zone des Sicherheitsbereichs vom Überwachungssensor erfasst werden, nämlich in einer Zone, die dem Mast bzw. dem Schlitten vergleichsweise näher ist, können hingegen dazu führen, dass aus Sicherheitsgründen die Bewegungen des Bohrgestänges und des Schlittens gestoppt werden. Dementsprechend kann vorgesehen sein, dass der Überwachungssensor unterschiedliche Sensorsignale ausgibt, in Abhängigkeit davon, in welcher Zone seines Erfassungsbereichs eine Bewegung erfasst wird.

Vorteilhaft kann der Überwachungssensor nicht unmittelbar am Mast gehalten sein, sondern vielmehr an einem Ausleger, der seinerseits an dem Mast gehalten ist. Auf diese Weise können Abschattungen vermieden werden, die ansonsten ggf. auftreten könnten und beispielsweise bei angehobenem Schlitten Bereiche innerhalb des Sicherheitsbereichs ergeben könnten, die vom Überwachungssensor nicht erfasst werden können.

Vorteilhaft kann der Überwachungssensor als so genannter 3-D Sensor ausgestaltet sein. Derartige Sensoren sind handelsüblich. Ihr Erfassungsbereich kann einerseits mit dem Erfassungsbereich einer Kamera verglichen werden, andererseits kommt jedoch eine Abstandsinformation hinzu, die ebenfalls von dem Sensor erfasst wird und bei dem vorschlagsgemäßen VertikalBohrgerät eine Höheninformation ist. Mittels einer geeigneten Software, die üblicherweise von dem Hersteller des Überwachungssensor bereitgestellt wird, kann innerhalb des vom 3-D Sensor erfassten Erfassungsbereich ein Sicherheitsbereich definiert werden, sowohl hinsichtlich der überwachten Fläche als auch hinsichtlich der überwachten Höhe, der dann zur Ausgabe von Sensorsignalen führt, wenn innerhalb dieses Sicherheitsbereichs Bewegungen durch den 3-D Sensor erfasst werden.

Vorteilhaft können zwei Überwachungssensoren vorgesehen sein. So lassen sich unnötige Alarm- bzw. Steuerungssignale vermeiden:
In einer ersten Ausgestaltung können die beiden Überwachungssensoren so angeordnet sein, dass beispielsweise Abschattungen vermieden werden: wenn beispielsweise ein Mast oder ein anderes Bauteil in den Erfassungsbereich eines Überwachungssensors ragt, so können hinter diesem Bauteil auftretende Bewegungen von diesem Überwachungssensor nicht erfasst werden. Dieser zwar im Erfassungsbereich liegende, aber dennoch nicht einsehbare Bereich wird als Abschattung bezeichnet. Der zweite Überwachungssensor kann in diesem Fall vorteilhaft so angeordnet sein, dass er den abgeschatteten, vom ersten Überwachungssensor nicht einsehbaren Bereich erfasst. Diese erste Ausgestaltung ist besonders einfach zu verwirklichen, da die Auswertung der Sensor-Informationen beider Überwachungssensoren auf die gleiche Weise und völlig unabhängig voneinander erfolgen kann.

In einer zweiten Ausgestaltung können die Erfassungsbereiche der beiden Überwachungssensoren einander überlappen. Wenn zwischen einen einzelnen Überwachungssensor und den zu überwachenden Bereich ein Gegenstand gerät, so wird automatisch ein Sensorsignal ausgelöst. Fliegt beispielsweise ein Vogel zwischen dem Überwachungssensor und dem sicherheitsrelevanten Bereich, in dem sich Personal aufhalten könnte, durch den Erfassungsbereich des Überwachungssensors, so wird ein Sensorsignal ausgegeben und in Folge das weiter oben erwähnte Alarm- oder Steuerungssignal. Mittels zweier Überwachungssensoren hingegen, deren Erfassungsbereiche sich zumindest teilweise überdecken, wird eine Triangulation zwischen dem erwähnten Vogel und den beiden Überwachungssensoren möglich. Diese Triangulation wird in einer elektronischen Auswertungsschaltung durchgeführt bzw. berechnet, die den beiden Überwachungssensoren zugeordnet und der Steuerung des Vertikal-Bohrgeräts vorgeschaltet sein kann. Wenn aufgrund der Triangulation in der elektronischen Auswertungsschaltung ein Ergebnis berechnet wird, dass sich der Auslöser (z. B. der erwähnte Vogel) eines Sensorsignals zwar innerhalb des von den Sensoren überwachten Erfassungsbereichs, jedoch außerhalb des sicherheitsrelevanten Bereichs befindet, kann die Aussendung eines Alarm- oder Steuerungssignals unterbleiben. In dieser zweiten Ausgestaltung wird also dasselbe Ergebnis erhalten wie bei Verwendung eines weiter oben erwähnten 3-D Sensors, der innerhalb seines Erfassungsbereichs auch Abstandsinformationen liefert.

In einer dritten Ausgestaltung kann die Anordnung zweier Überwachungssensoren dazu dienen, bewusst eine so genannte Lücke zwischen den Erfassungsbereichen beider Sensoren zu schaffen, also Freiräume, in denen Bewegungen nicht durch die Überwachungssensoren erfasst werden. Beispielsweise können bewegliche Bauteile bei der automatisierten, elektronischen Auswertung der von den Überwachungssensoren gelieferten Signale zur Auslösung eines unerwünschten, unnötigen Alarm- oder Steuerungssignals führen. Wenn rechts und links eines solchen beweglichen Bauteils ein sicherheitsrelevanter Bereich überwacht werden soll, so würde bei Verwendung eines einzigen Überwachungssensors das bewegliche Bauteil stets im Erfassungsbereich liegen und zur Auslösung von Sensorsignalen bzw. folglich von Alarm- oder Steuerungssignalen führen. Die Anordnung von zwei oder mehr Überwachungssensoren ermöglicht es, abschnittsweise den sicherheitsrelevanten Bereich zu erfassen, und zwischen diesen Abschnitten bewusst nicht erfasste Lücken zu lassen, beispielsweise dort, wo das erwähnte bewegliche Bauteil angeordnet ist. Bewegungen dieses Bauteils führen dementsprechend nicht zu Sensorsignalen, so dass letztlich auch keine unnötigen Alarm- oder Steuerungssignale ausgegeben werden.

Durch die Anordnung von mehr als zwei Überwachungssensoren können dementsprechend viele Abschnitte eines insgesamt sicherheitsrelevanten, zu überwachenden Bereichs sensorisch erfasst werden, und dabei können entweder die einzelnen Erfassungsbereiche aneinander anschließen oder sich sogar überlappen, oder es können bewusst dementsprechend viele Lücken zwischen den einzelnen Erfassungsbereichen geschaffen werden.

Ausführungsbeispiele vorschlagsgemäßer Vertikal-Bohrgeräte werden nachfolgend anhand der rein schematischen Darstellungen näher erläutert. Dabei zeigt
- Fig. 1: eine Seitenansicht auf ein erstes Ausführungsbeispiel eines Bohrgeräts, einschließlich des Sicherheitsbereichs,
- Fig. 2: eine Draufsicht auf das Bohrgerät und den Sicherheitsbereich von Fig. 1, und
- Fig. 3: eine Ansicht ähnlich Fig. 2, allerdings für ein zweites Ausführungsbeispiel.

In den Zeichnungen ist mit 1 insgesamt ein Vertikal-Bohrgerät bezeichnet, das einen Mast 2 aufweist und auf einem Raupenfahrwerk 3 verfahrbar ist. Am Mast 2 ist ein Schlitten 4 höhenbeweglich geführt, wobei der Höhenbereich, in welchem der Schlitten 4 beweglich ist, als Höhenverstellbereich 5 bezeichnet und mit einem Doppelpfeil angedeutet ist.

Oberhalb dieses Höhenverstellbereichs 5 ist am Mast 2 ein Ausleger 6 befestigt, der seinerseits einen Überwachungssensor 7 trägt. Der Überwachungssensor 7 ist am Ausleger 6 so ausgerichtet, dass sein Erfassungsbereich nach unten gerichtet ist. Ein Sicherheitsbereich 8 ist vorgesehen, der in den Zeichnungen schraffiert angedeutet ist und in dem während des Betriebs des Bohrgeräts 1 Bewegungen nicht zulässig sind, seien es Gegenstände, die in diesen Sicherheitsbereich 8 hineinragen oder Personen, die sich in diesen Sicherheitsbereich 8 hinein bewegen. Der Sicherheitsbereich 8 erstreckt sich über den Höhenverstellbereich 5 und in einem bestimmten Maß vor den Mast 2 sowie den Schlitten 4.

Als Überwachungssensor 7 ist bei dem dargestellten Ausführungsbeispiel ein 3-D Sensor vorgesehen. Eine zu dem 3-D Sensor gehörige Software kann so programmiert werden, dass die Querschnittskontur und die Höhe des Sicherheitsbereichs 8 vom Anwender, beispielsweise vom Hersteller des Bohrgeräts 1, bestimmt werden kann, wobei ggf. in unterschiedlichen Höhen unterschiedliche Querschnittskonturen des Sicherheitsbereichs 8 definiert werden können.

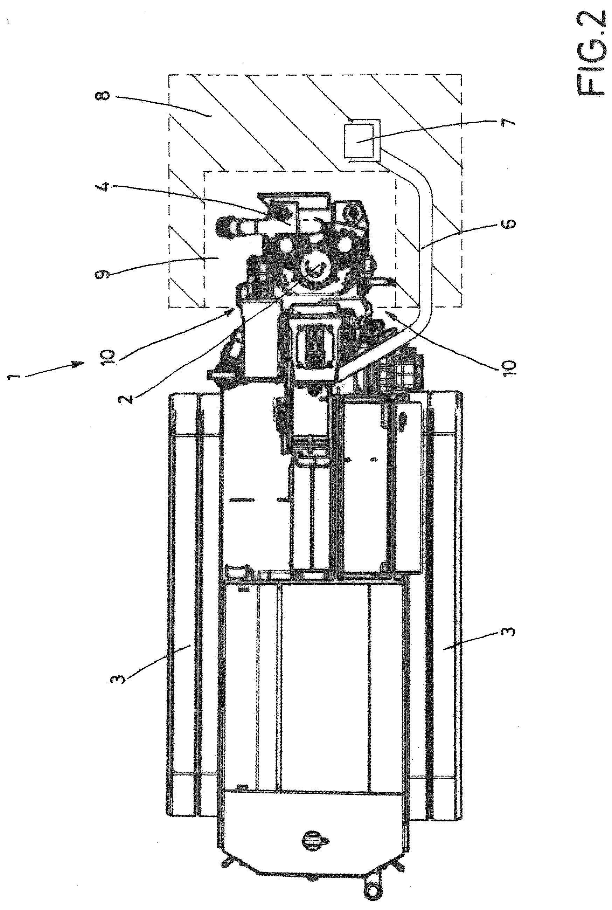

Aus Fig. 2 wird deutlich, dass der Sicherheitsbereich 8 einen annähernd U-förmigen Querschnitt aufweist und somit eine Bewegungszone 9 umgibt, innerhalb welcher Bewegungen, die vom Überwachungssensor 7 erfasst werden, nicht zur Auslösung eines Sensorsignals führen, so dass sich in dieser Bewegungszone der Schlitten 4 und das Bohrgestänge bewegen können, ohne zur Auslösung der Sicherheitsschaltung zu führen.

Rein beispielhaft ist anhand von Fig. 2 der U-förmige Querschnitt des Sicherheitsbereichs 8 dargestellt, und rein beispielhaft ist bei dem dargestellten Ausführungsbeispiel vorgesehen, dass der Sicherheitsbereich 8 über seine gesamte Höhe, also über den gesamten Höhenverstellbereich 5, eine gleich bleibende Querschnittskontur aufweist. Abweichend von dem dargestellten U-förmigen Querschnitt kann ein geschlossener, ringförmiger Querschnitt des Sicherheitsbereichs 8 vorgesehen sein, mit einer mittig oder exzentrisch darin verlaufenden Bewegungszone 9. Oder es kann ein Ω-förmiger Sicherheitsbereich 8 vorgesehen sein, der sich in der Nähe von zwei Seitenflächen 10, die in Fig. 2 angedeutet sind, näher an das Bohrgerät 1 heran erstreckt, so dass die Bewegungszone 9 keinen rechteckigen Querschnitt aufweist, wie in Fig. 2 dargestellt, sondern beispielsweise einen trapezoiden Querschnitt.

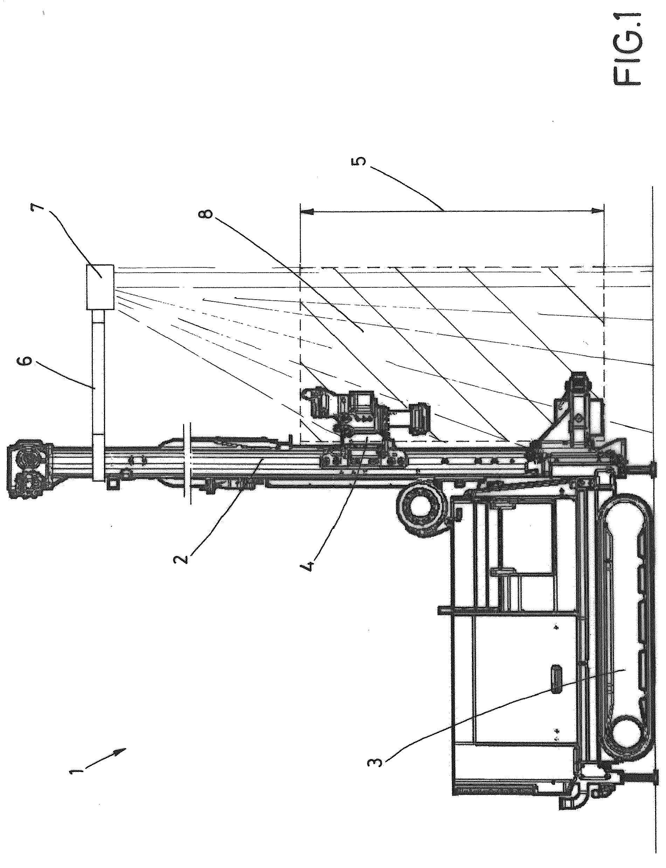

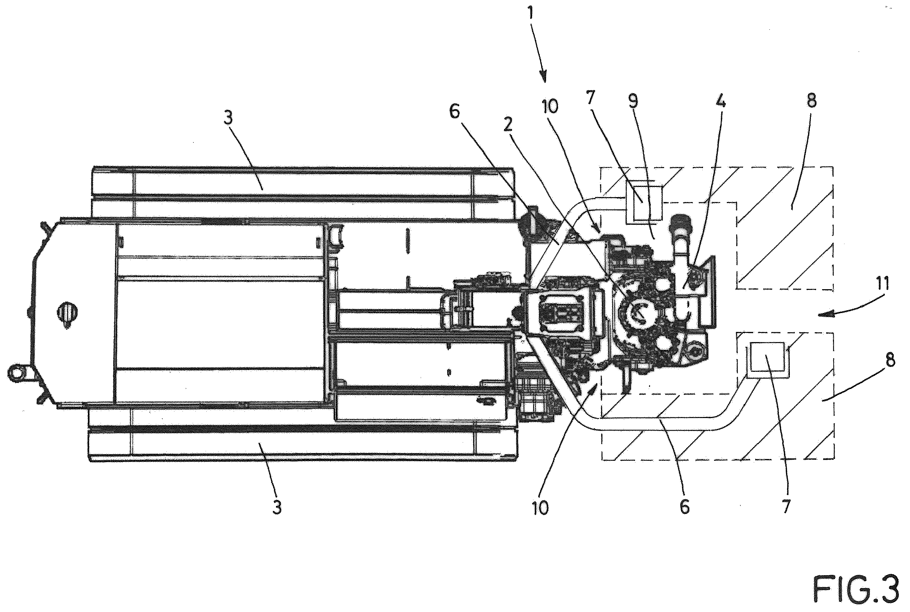

Fig. 3 zeigt grundsätzlich dieselbe Situation wie Fig. 2, allerdings für ein zweites Ausführungsbeispiel eines Vertikal-Bohrgeräts 1. Dieses unterscheidet sich von dem Ausführungsbeispiel der Figuren 1 und 2 dadurch, dass zwei Ausleger 6 vorgesehen sind, von denen jeder einen Überwachungssensor 7 trägt. Abschattungen innerhalb des Sicherheitsbereichs 8, die durch vorstehende Teile wie beispielsweise den Schlitten 4 hervorgerufen werden könnten, falls lediglich ein einziger Überwachungssensor 7 verwendet wird, können durch die Anordnung zweier oder auch mehrerer Überwachungssensoren 7 vermieden werden.

Weiterhin ist in Fig. 3 angedeutet, dass nicht ein einziger, zusammenhängender Sicherheitsbereich 8 vorgesehen ist, sondern vielmehr zwei separate Sicherheitsbereiche 8, zwischen denen sich eine Lücke 11 befindet, die nicht überwacht wird. Der Ort, wo diese Lücke 11 vorgesehen ist, ist in Fig. 3 lediglich zur Veranschaulichung dieser Möglichkeit, eine Lücke im Sicherheitsbereich zu schaffen, schematisch und beispielhaft gewählt. Damit ein Überwachungssensor 7 im Bereich der Lücke 11 nicht ungewünscht Bewegungen erfasst und dementsprechend unerwünschte Sensorsignale abgibt, kann vor dem jeweiligen Überwachungssensor 7 ein Hindernis montiert sein, so dass die Lücke 11 in einer Abschattung dieses Hindernisses liegt. Alternativ dazu kann die Lücke 11 rein rechnerisch berücksichtigt werden, nämlich in der Sicherheitsschaltung, indem gewisse Sensordaten nicht elektronisch ausgewertet, also nicht weiter verarbeitet werden, nämlich Sensordaten, die aus Bewegungen resultieren, welche im Bereich dieser Lücke 11 stattfinden.

Jeder der beiden Überwachungssensoren 7 ist in Fig. 3 oberhalb von jeweils nur einem der beiden Sicherheitsbereiche 8 dargestellt. Allerdings kann die automatische Auswertung der Sensordaten in der Weise erfolgen, dass jeder der beiden Überwachungssensoren 7 nicht nur zur Überwachung eines Sicherheitsbereichs 8 dient, oberhalb dessen der jeweilige Überwachungssensor 7 angeordnet ist, sondern auch zur Überwachung des jeweils anderen bzw. gegenüberliegenden Sicherheitsbereichs 8. Dadurch, dass die beiden Sicherheitsbereiche 8 oder zumindest ein Abschnitt dieser beiden Sicherheitsbereiche 8 von beiden Überwachungssensoren 7 überwacht wird, kann eine besonders präzise Lokalisierung der jeweils erfassten Bewegungen ermöglicht werden, und zudem können hierdurch Abschattungen vermieden werden, da die beiden Überwachungssensoren 7 aus zwei unterschiedlichen Winkeln auf den entsprechenden Abschnitt bzw. Sicherheitsbereich 8 gerichtet sind.

## Patentansprüche

1. Vertikal-Bohrgerät (1),
mit einem aufrechten Mast (2)
und einem Schlitten (4), der an dem Mast (2) innerhalb eines so genannten Höhenverstellbereichs (5) höhenbeweglich verfahrbar ist,
und mit einem Sicherheitsbereich (8), der sich um den Schlitten (4) herum und über dessen Höhenverstellbereich (5) erstreckt,
**dadurch gekennzeichnet,**
**dass** oberhalb des Schlittens (4) ein Überwachungssensor (7) angeordnet ist, dessen Erfassungsbereich nach unten ausgerichtet ist,
derart, dass der Sicherheitsbereich (8) mittels des Überwachungssensors (7) erfasst wird,
und **dass** der Überwachungssensor (7) wirksam mit einer Sicherheitsschaltung verbunden ist.

2. Vertikal-Bohrgerät nach Anspruch 1,
**dadurch gekennzeichnet,**
**dass** der Überwachungssensor (7) an einem Ausleger (6) gehalten ist,
wobei der Ausleger (6) am Mast (2) gehalten ist.

3. Vertikal-Bohrgerät nach Anspruch 1 oder 2,
**dadurch gekennzeichnet,**
**dass** der Überwachungssensor (7) als so genannter 3-D Sensor ausgestaltet ist.

4. Vertikal-Bohrgerät nach einem der vorhergehenden Ansprüche,
**dadurch gekennzeichnet,**
**dass** oberhalb des Schlittens (4) zwei Überwachungssensoren (7) angeordnet sind.

5. Vertikal-Bohrgerät nach Anspruch 4,
**dadurch gekennzeichnet,**
**dass** die Überwachungssensoren (7) derart angeordnet sind, dass sich ihre Erfassungsbereiche überschneiden.

6. Vertikal-Bohrgerät nach Anspruch 4,
**dadurch gekennzeichnet,**
**dass** die Überwachungssensoren (7) derart angeordnet sind, dass zwischen ihren Erfassungsbereichen ein nicht erfasster, als Lücke (11) bezeichneter Freiraum verbleibt.
